# EUROPÄISCHE PATENTSCHRIFT

(11) **EP 1 053 114 B1**
(45) Veröffentlichungstag und Bekanntmachung des Hinweises auf die Patenterteilung: **06.08.2003**
(21) Anmeldenummer: 99962243.4
(22) Anmeldetag: 08.12.1999
(51) Int. Cl.: B60C 23/04

(54) **VERFAHREN ZUM BETREIBEN EINER EINRICHTUNG ZUM ÜBERWACHEN UND DRAHTLOSEN SIGNALISIEREN EINER DRUCKÄNDERUNG**
METHOD FOR OPERATING A DEVICE FOR THE MONITORING AND WIRELESS SIGNALING OF A PRESSURE CHANGE IN PNEUMATIC TIRES OF A VEHICLE
PROCEDE POUR FAIRE FONCTIONNER UNE UNITE SERVANT A SURVEILLER ET A SIGNALER SANS FIL UNE VARIATION DE PRESSION DANS DES PNEUS DE VEHICULES

(30) Priorität: 09.12.1998 DE 19856860
(43) Veröffentlichungstag der Anmeldung: 22.11.2000
(73) Patentinhaber: Beru Aktiengesellschaft, 71636 Ludwigsburg (DE)
(72) Erfinder: KESSLER, Ralf, D-76327 Pfinztal (DE); KÜHNLE, Andreas, D-75433 Maulbronn (DE); NORMANN, Norbert, D-75233 Niefern-Öschelbronn (DE); SCHULZE, Gunter, Lothar, D-75228 Ispringen (DE)
(74) Vertreter: Twelmeier, Ulrich, Dipl.Phys.
(86) Internationale Anmeldenummer: EP9909652
(87) Internationale Veröffentlichungsnummer: WO00034063

(56) Entgegenhaltungen:
- EP-A- 0 657 314
- WO-A-92/14620
- WO-A-97/00784
- DE-A- 3 703 128
- DE-A- 19 608 478
- DE-C- 19 602 593
- US-A- 5 825 286

## Beschreibung

Die Erfindung geht aus von einem Verfahren mit den im Oberbegriff des Anspruchs 1 angegebenen Merkmalen. Ein solches Verfahren ist aus der WO 97/00784 bekannt. Diese Druckschrift offenbart ein Verfahren zum Betreiben einer Einrichtung zum Überwachen und drahtlosen Signalisieren einer Druckänderung in Luftreifen an Fahrzeugen, welche in Baueinheit mit einem Ventil im Luftreifen angeordnet ist und eine Stromquelle, einen Drucksensor, welcher in ersten Zeitabständen den Reifendruck mißt, einen Analog-Digital-Wandler zum Digitalisieren eines vom Drucksensor gewonnenen Drucksignals, einen Speicher zum Speichem des Drucksignals, einen Sender, welcher eine Information über den gemessenen Reifendruck an ein im Fahrzeug angeordnetes Empfangsgerät übermittelt, und einen Vergleicher hat, der insbesondere in Baueinheit mit einem Mikroprozessor oder dergleichen mikroelektronischer Recheneinheit ausgebildet ist. Der Vergleicher vergleicht jedes vom Drucksensor gemessene und übermittelte Drucksignal mit einem vorher gespeicherten Vergleichsdrucksignal. Als Vergleichsdrucksignal wird das zuletzt gemessene Drucksignal oder ein Mittelwert aus mehreren. z.B. aus den letzten drei gemessenen Drucksignalen verwendet. Der Vergleicher steuert den Sender in der Weise. daß der Sender in zweiten Zeitabständen, welcher größer sind als die ersten Zeitabstände. sendet. solange wie die Abnahme des Drucksignals vom Vergleichsdrucksignal (nachfolgend als Drift des Drucksignals oder einfach als Drift bezeichnet) in einer vorgegebenen Zeiteinheit einen Schwellenwert nicht übersteigt, daß der Sender aber in dritten Zeitabständen, welche kleiner sind als die zweiten Zeitabstände, sendet, wenn und solange wie die Drift den Schwellenwert übersteigt. Dieser Arbeitsweise liegt die Überlegung zugrunde, daß weitaus die meisten mit einem Druckverlust einhergehenden Reifenschäden auf einen langsamen, "schleichenden" Druckverlust zurückgehen oder sich durch einen solchen schleichenden Druckverlust ankündigen. In einer praktisch ausgeführten Einrichtung zur Reifendrucküberwachung betragen
die ersten Zeitabstände: 3 s.
die zweiten Zeitabstände: 54 s
und der Schwellenwert der Drift, bei welcher von der langsamen Senderate (Zeitabstände von 54 s) umgeschaltet wird auf eine schnellere Senderate in dritten Zeitabständen: 0.2 bar/min.

Die dritten Zeitabstände betragen bei der bekannten Einrichtung nur 0,8 s: mit diesen kurzen Zeitabständen wird bei der bekannten Einrichtung, wenn die Drift den Schwellenwert übersteigt, der Reifendruck sowohl gemessen als auch gesendet. um einen gefährlichen Druckabfall auf jeden Fall rechtzeitig erkennen und melden zu können. Mit einer in dieser Weise umschaltbaren Meß- und Senderate hat man eine Lebensdauer der Batterie in der Radelektronik von 7 bis 8 Jahren erreicht. Wünschenswert wäre jedoch eine weitere Steigerung der Lebensdauer der Batterie.

Aus der DE 37 03 128 A1 ist eine Einrichtung zum Überwachen und drahtlosen Signalisieren des Reifendrucks bekannt, in der z. B. ein Fliehkraftschalter vorgesehen ist, welcher geschlossen wird, wenn sich das betreffende Rad mit einer Geschwindigkeit von mindestens ca. 30 km/h dreht, so daß die Einrichtung nur aktiviert wird, wenn das Fahrzeug fährt und diese Geschwindigkeit überschreitet Deshalb entnimmt die Einrichtung bei stillstehendem Fahrzeug ihrer Batterie keinen Strom. Nach der Aktivierung wird allerdings bei jedem Messvorgang auch gesendet, und zwar stufenweise umso häufiger, je schneller das Fahrzeug fährt. Trotz einer geringeren Meß- und Senderate als im Falle der WO 97/000 784 wird eine Batterielebensdauer wie dort aber bei weitem nicht erreicht, sondern ein praktisch nicht durchführbarer Batteriewechsel inkaufgenommen. Nachteilig ist femer, daß bei langsamer Fahrt, bei Verkehrsstaus und bei Stop-and-Go-Verkehr keine Reifendrucküberwachung stattfindet und daß die Geschwindigkeitsschwelle, ab welcher eine Überwachung stattfindet, nicht stabil ist. Außerdem kann bei dieser bekannten Einrichtung ein besonders riskanter schneller Druckverlust überhaupt nicht erfasst werden.

Der vorliegenden Erfindung liegt die **Aufgabe** zugrunde, in einer Einrichtung zur Reifendrucküberwachung der aus der WO 97/000 784 gekannten Art die Lebensdauer der Batterie weiter zu erhöhen, ohne die Sicherheit und Zuverlässigkeit der laufenden Reifendruckkontrolle zu beeinträchtigen und ohne auf eine Reifendrucküberwachung im Stillstand des Fahrzeugs zu verzichten.

Diese Aufgabe wird gelöst durch ein Verfahren mit den im Anspruch 1 angegebenen Merkmalen. Vorteilhafte Weiterbildungen der Erfindung sind Gegenstand der abhängigen Ansprüche.

Erfindungsgemäß werden die zweiten Zeitabstände, in denen von der Radelektronik ein Drucksignal auch dann an den Empfänger im Fahrzeug gesendet wird, wenn die Drift des Drucksignals den Schwellenwert nicht übersteigt, nicht konstant gehalten, sondern sie werden in Abhängigkeit von einem oder mehreren im Luftreifen gemessenen und im Fahrbetrieb veränderlichen physikalischen Zuständen verändert Das macht es möglich, in Zuständen, die sich durch ein geringeres Sicherheitsrisiko auszeichnen. die zweiten Zeitabstände zu verlängem, dadurch die Häufigkeit der Aktivierung des Senders zu verringern und somit Strom zu sparen. Es hat sich gezeigt, daß auf diese Weise die Batterielebensdauer auf über 10 Jahre gesteigert werden kann.

Sicherheitsrelevant ist die Geschwindigkeit des Fahrzeugs. Bei hoher Geschwindigkeit ist ein Druckverlust in einem Fahrzeugreifen viel gefährlicher als bei niedriger Geschwindigkeit. Die meisten Fahrzeuge werden aber überwiegend mit verhältnismäßig niedriger Geschwindigkeit (Stadtverkehr) bewegt. Vorzugsweise wird das Verfahren deshalb so durchgeführt, daß die zweiten Zeitabstände mit zunehmender Geschwindigkeit des Fahrzeuges verkürzt bzw. mit abnehmender Geschwindigkeit verlängert werden. Da der in jedem Fahrzeug vorhandene Geschwindigkeitsmesser nicht mit der Radelektronik verbunden werden kann, ist ein geschwindigkeitsabhängiges Signal in der Radelektronik selbst zu bilden. Das kann mit Hilfe eines elektronischen Fliehkraftsensors geschehen. Die Fliehkraft ist der Drehzahl des Rades und damit der Fahrgeschwindigkeit proportional. Ein Fliehkraftsensor ist ein auf Zentrifugalbeschleunigungen ansprechender Sensor. Miniaturisierte Beschleunigungssensoren auf Halbleiterbasis, die mit verhältnismäßig geringem Aufwand in die Radelektronik integriert werden können, sind verfügbar. Besonders geeignet ist ein piezo-resistiver Beschleunigungssensor mit einer Membran. an welcher ein Massekörper z.B. durch K!eben befestigt ist. welcher unter der Wirkung der Fliehkraft die Membran verformt, wodurch infolge des Piezo-Effektes eine elektrische Spannung erzeugt wird. deren Größe ein Maß für die Fliehkraft ist. Dabei kann der Zusammenhang zwischen Spannung und Fahrgeschwindigkeit linear sein, muß aber nicht linear sein. Ein solcher piezo-resistiver Fliehkraftsensor ist sehr zuverlässig. Mit ihm können die Zeitabstände, in denen der Sender auch ohne Feststellen einer einen Schwellenwert übersteigenden Drift des Reifendrucks aktiviert wird. linear mit zunehmender Geschwindigkeit verkürzt werden. Ein linearer Zusammenhang ist aber keineswegs zwingend. Die zweiten Zeitabstände können durchaus nach einer nichtlinearen Kennlinie verändert werden, insbesondere ist es vorteilhaft, sie mit zunehmender Geschwindigkeit überproportional zu verkürzen.

Am größten sind die zweiten Zeitabstände vorzugsweise dann. wenn das Fahrzeug stillsteht. Bei stillstehendem Fahrzeug wird die Radelektronik aber nicht komplett abgeschaltet. Vielmehr kann ein bei stillstehendem Fahrzeug auftretender gefährlicher Druckvertust dem Fahrer bereits vor Antritt der Fahrt signalisiert werden.

Besonders geeignete zweite Zeitabstände für das Aktivieren des Senders bei stillstehendem Fahrzeug sind 5 min, bis 30 min.. besonders bevorzugt ist ein zweiter Zeitabstand von 10 min. bis 15 min. Vorzugsweise werden die zweiten Zeitabstände bei stillstehendem Fahrzeug groß gegen die zweiten Zeitabstände bei fahrendem Fahrzeug gewählt.

In den risikoarmen Fahrzuständen (langsame Fahrt und Stillstand) können die zweiten Zeitabstände, in denen der Sender sendet, erfindungsgemäß über den bei der bekannten Einrichtung vorgesehenen zweiten Zeitabstand von 54 s hinaus wesentlich verlängert werden. Andererseits ermöglicht es die Erfindung, in Fahrzuständen mit größerem Risiko in kürzeren Zeitabständen als den aus dem Stand der Technik bekannten starren 54 s zu senden und dadurch an Sicherheit zu gewinnen. Insgesamt gesehen ermöglicht die Erfindung eine sich am Risiko flexibel orientierende Senderate und erreicht dadurch zwei schwer miteinander vereinbare Vorteile, nämlich eine höhere Sicherheit in Verbindung mit einer längeren Batterielebensdauer.

Werden die zweiten Zeitabstände bei Überschreiten des Schwellenwertes der Drift des Drucksignals verkürzt, dann erfolgt die Verkürzung zweckmäßigerweise auf die ersten Zeitabstände. in denen der Drucksensor den Reifendruck mißt, so daß mögliche gefährliche Entwicklungen rasch erkannt werden können. Vorzugsweise werden bei Überschreiten des Schwellenwertes der Drift aber ebenso wie bei der praktisch ausgeführten Reifendrucküberwachungseinrichtung gemäß der WO 97/00784 zugleich auch die ersten Zeitabstände verkürzt und in vierten Zeitabständen, welcher kleiner sind als die ersten Zeitabstände, der Druck sowohl gemessen als auch gesendet und im Empfangsgerät ausgewertet.

Nach einem in der DE 196 08 478 offenbarten Verfahren ist es bekannt, in einer Einrichtung zum Überwachen und drahtlosen Signalisieren einer Druckänderung in Luftreifen an Fahrzeugen vor Beginn einer jeden Fahrt aus den an das Empfangsgerät übermittelten Signalen, die neben einer Druckinformation auch eine für jede Radposition charakteristische Kennung enthatten, die zu jeder Kennung gehörende Radposition zu ermitteln und im Empfangsgerät zu speichern. Auf diese Weise kann das Empfangsgerät selbsttätig feststellen, ob ein Rad gewechselt wurde, z.B. beim Wechsel von Sommerrädem auf Winterräder oder nach dem Montieren eines Reserverades. Bei Anwendung des aus der WO 97/00784 bekannten Verfahrens, bei welchem der Sender in den Radelektroniken in festen zweiten Zeitabständen aktiviert wird, bedarf es einer Zeit von 15 min. bis 30 min., bis das Empfangsgerät die mit den übertragenen Signalen empfangenen Kennungen den unterschiedlichen Radpositionen zugeordnet hat: solange das nicht geschehen ist, bleiben die zuletzt gespeicherten Zuordnungen erhalten. Die Lemzeit des Empfangsgeräts kann auf wenige Minuten verkürzt werden, wenn
die zweiten Zeitabstände nicht konstant gehalten, sondern erfindungsgemäß abhängig vom Fahrzustand verkürzt oder verlängert werden können. Zur Verkürzung der Lemzeit des Empfangsgeräts kann man vorsehen, in einer begrenzten Phase zu Beginn einer Fahrt die zweiten Zeitabstände besonders stark zu verkürzen und vorzugsweise unabhängig von der Fahrgeschwindigkeit auf einen so kurzen Wert zu setzen, daß die Zuordnung der Kennungen zu den einzelnen Radpositionen längstens in wenigen Minuten erfolgt.

Der Beschleunigungssensor kann mit Vorteil weiterhin dazu verwendet werden, die Anzahl der für den Empfang der Signale von den verschiedenen Rädern benötigten Antennen zu verringern. Anhand von Unterschieden zwischen den an den verschiedenen Rädern gemessenen radialen und tangentialen Beschleunigungen kann man zwischen ge!enkten und nicht gelenkten Rädern sowie zwischen rechten und linken Rädern unterscheiden und braucht deshalb für die Unterscheidung der Räder nicht jedem Rad eine eigene Antenne zuzuordnen. Wegen näherer Einzelheiten dazu wird auf die DE 197 35 686 und auf die am selben Tage wie die vorliegende Patentanmeldung eingereichte deutsche Patentanmeldung mit dem Titel "Verfahren zum Zuordnen von Kennungen in Signalen von Sendern in einem Reifendrucküberwachungssystem zu den Rädern. an welchen sich die Sender befinden" verwiesen.

Sicherheitsrelevante Zustände sind auch der Reifendruck selbst und seine Drift.

Eine vorteilhafte Weiterbildung der Erfindung besteht deshalb darin, daß die zweiten Zeitabstände auch in Abhängigkeit vom gemessenen Druck verändert werden, und zwar vorzugsweise dahingehend, daß der Schwellenwert der Drift des Drucksignals, bei welchem von langsamer Senderate auf schnelle Senderate umgeschaltet wird, nicht mehr konstant vorgegeben, sondern druckabhängig oder abhängig von einer Drift des Druck gebildet wird, wobei man den Schwellenwert mit fallendem Druck bzw. mit zunehmender Drift verkleinert. Das hat den Vorteil, daß um so häufiger gesendet wird, je niedriger der Reifendruck ist. Auch dadurch wird die Senderate dem tatsächlichen Risiko flexibel angepaßt und bei größerem Risiko häufiger gesendet als bei kleinerem Risiko.

Der Zusammenhang zwischen der druckabhängigen Schwelle der Drift und dem Reifendruck oder der Drift des Reifendrucks muß dabei keineswegs linear sein. Vielmehr kann man vorsehen, die Druckschwelle überproportional mit sinkendem Druck bzw. zunehmender Drift zu verringern. Auch dadurch erreicht man wie bei der geschwindigkeitsabhängigen Wahl der zweiten Zeitabstände die beiden schwer zu vereinbarenden Vorteile, daß man die Überwachungssicherheit verbessert und gleichzeitig der Batterielebensdauer verlängert.

Die druckabhängige Wahl der Schwelle der Drift des Drucksignals kann mit besonderem Vorteil in Kombination mit einer geschwindigkeitsabhängigen Wahl der zweiten Zeitabstände verwirklicht werden, aber auch unabhängig davon. Wird sie in Kombination mit der geschwindigkeitsabhängigen Wahl der zweiten Zeitabstände verwirklicht, dann gibt man dem Mikroprozessor oder einer anderen mikroelektronischen Recheneinheit in der Radelektronik am besten ein Kennlinienfeld vor, welches aus einer Schar von Kennlinien besteht, von denen jede die Abhängigkeit der zweiten Zeitabstände von der Geschwindigkeit wiedergibt, wobei jede Kennlinie für einen anderen Reifendruck oder für eine andere Drift gilt. Kennfeldsteuerungen sind dem Fachmann im Bereich der Automobiltechnik an sich bekannt, z.B. bei der Steuerung von Verbrennungsmotoren.

## Patentansprüche

1. Verfahren zum Betreiben einer Einrichtung zum Überwachen und drahtlosen Signalisieren einer Druckänderung in Luftreifen an Fahrzeugen, welche vorzugsweise in Baueinheit mit dem Ventil des Luftreifens im Luftreifen angeordnet ist und
eine Stromquelle,
einen Drucksensor, welcher in ersten Zeitabständen den Reifendruck mißt, einen Analog-Digital-Wandler zum Digitalisieren eines vom Drucksensor gewonnenen Drucksignals,
einen Speicher zum Speichern des Drucksignals,
einen Sender, welcher eine Information über den gemessenen Reifendruck an ein im Fahrzeug angeordnetes Empfangsgerät übermittelt,
und einen Vergleicher hat, insbesondere in Baueinheit mit einem Mikroprozessor, welcher das Drucksignal mit einem vorher gespeicherten Vergleichsdrucksignal vergleicht und den Sender steuert, nämlich in der Weise, daß der Sender in zweiten Zeitabständen, welche größer sind als die ersten Zeitabstande, sendet, solange wie die Abnahme pro Zeiteinheit des Drucksignals vom Vergleichsdrucksignal (Drift) einen Schwellenwert nicht übersteigt, daß der Sender aber in dritten Zeitabständen, welche kleiner sind als die zweiten Zeitabstände, sendet, wenn und solange die Drift den Schwellenwert übersteigt,
**dadurch gekennzeichnet, daß** die zweiten Zeitabstände in Abhängigkeit von einem oder mehreren im Luftreifen gemessenen und im Fahrbetrieb veränderlichen physikalischen Zuständen verändert werden.

2. Verfahren nach Anspruch 1, **dadurch gekennzeichnet, daß** der physikalische Zustand die Geschwindigkeit des Fahrzeugs ist.

3. Verfahren nach Anspruch 1 oder 2, **dadurch gekennzeichnet, daß** der physikalische Zustand der Luftdruck im Reifen ist.

4. Verfahren nach einem der Ansprüche 1 bis 3, **dadurch gekennzeichnet, daß** der physikalische Zustand die Drift des Luftdrucks im Reifen ist

5. Verfahren nach Anspruch 3 oder 4, **dadurch gekennzeichnet, daß** der Schwellenwert der Drift des Drucksignals abhängig von dem Drucksignal oder dessen Drift verändert wird.

6. Verfahren nach Anspruch 5, **dadurch gekennzeichnet, daß** der Schwellenwert der Drift des Drucksignals mit fallendem Drucksignal oder steigender Drift verkleinert wird.

7. Verfahren nach einem der Ansprüche 3 bis 6, **dadurch gekennzeichnet, daß** die zweiten Zeitabstände nach einem vorgegebenen und im Mikroprozessor gespeicherten Kennlinienfeld berechnet werden, weiches die Abhängigkeit der zweiten Zeitabstände sowohl von der Geschwindigkeit als auch von der Drift des Drucksignals willkürlich vorgibt.

8. Verfahren nach einem der vorstehenden Ansprüche, **dadurch gekennzeichnet, daß** die zweiten Zeitabstände mit zunehmender Geschwindigkeit des Fahrzeuges verkürzt werden.

9. Verfahren nach einem der vorstehenden Ansprüche, **dadurch gekennzeichnet, daß** die zweiten Zeitabstände am größten sind, wenn das Fahrzeug stillsteht.

10. Verfahren nach Anspruch 9. **dadurch gekennzeichnet, daß** die zweiten Zeitabstände bei stillstehendem Fahrzeug konstant gehalten werden.

11. Verfahren nach einem der vorstehenden Ansprüche, **dadurch gekennzeichnet, daß** die zweiten Zeitabstände bei stillstehendem Fahrzeug groß sind gegen die zweiten Zeitabstände bei fahrendem Fahrzeug.

12. Verfahren nach einem der vorstehenden Ansprüche, **dadurch gekennzeichnet, daß** in einer Phase zu Beginn einer Fahrt die zweiten Zeitabstände besonders kurz gehalten werden und in dieser Phase aus den an das Empfangsgerät übermittelten Signalen, die neben einer Druckinformation auch eine für jede Radposition charakteristische Kennung enthalten, die zu jeder Kennung gehörende Radposition ermittelt und im Empfangsgerät gespeichert wird.

13. Verfahren nach einem der vorstehenden Ansprüche, **dadurch gekennzeichnet, daß** die zweiten Zeitabstände bei stillstehendem Fahrzeug zu 5 min. bis 30 min. gewählt werden.

14. Verfahren nach Anspruch 13, **dadurch gekennzeichnet, daß** die zweiten Zeitabstände bei stillstehendem Fahrzeug zu 10 min. bis 15 min. gewählt werden.

15. Verfahren nach einem der vorstehenden Ansprüche, **dadurch gekennzeichnet, daß** die dritten Zeitabstände mit den ersten Zeitabständen übereinstimmen, so daß jedes gemessene Drucksignal gesendet wird.

16. Verfahren nach einem der Ansprüche 1 bis 14, **dadurch gekennzeichnet, daß** solange, wie die Drift den Schwellenwert übersteigt, in vierten Zeitabständen, welche kürzer sind als die ersten Zeitabstände, der Reifendruck gemessen und gesendet wird.

## Claims

1. A method for operating a device for monitoring and wireless signalling a pressure change in vehicle tires, being preferably arranged in the tire in the form of a module including a tire valve, and comprising
a power source,
a pressure sensor arranged for measuring the tire pressure at first time intervals,
an analog/digital converter for digitizing a pressure signal obtained from the pressure sensor,
a memory for storing the pressure signal,
a transmitter for transmitting the measured tire pressure information to a receiving unit located in the vehicle,
a comparator, especially one realized physically united with a microprocessor, which compares the pressure signal with a previously stored reference pressure signal and controls the transmitter in such a way that the transmitter will transmit signals at second time intervals greater than the first time intervals as long as the decrease per time unit of the pressure signal relative to the reference pressure signal (drift) does not exceed a threshold value, but will transmit signals at third time intervals smaller than the second time intervals when and as long as the drift exceeds the pressure threshold value, **characterized in that** the second time intervals are varied in response to one or more physical conditions that are measured in the tire and which vary during driving operation.

2. The method as defined in Claim 1, **characterized in that** the physical condition is the vehicle speed.

3. The method as defined in Claim 1 or Claim 2, **characterized in that** the physical condition is the air pressure in the tire.

4. The method as defined in Claims 1 through 3, **characterized in that** the physical condition is the drift of the air pressure in the tire.

5. The method as defined in Claim 3 or Claim 4, **characterized in that** the threshold value of the pressure signal drift is varied in response to the pressure signal or its drift.

6. The method as defined in Claim 5, **characterized in that** the threshold value of the drift of the pressure signal is reduced as the pressure signal decreases or the drift increases.

7. The method as defined in Claims 3 through 6, **characterized in that** the second time intervals are calculated based on a predetermined field of characteristics, stored in the microprocessor, which arbitrarily specifies the dependency of the second time intervals on both the speed and the pressure signal drift.

8. The method as defined in any of the preceding Claims, **characterized in that** the second time intervals are reduced as the speed of the vehicle increases.

9. The method as defined in any of the preceding Claims, **characterized in that** the second time intervals are the highest in the stand still condition of the vehicle.

10. The method as defined in Claim 8, **characterized in that** the second time intervals are kept constant in the stand still condition of the vehicle.

11. The method as defined in any of the preceding Claims, **characterized in that** the second time intervals are high in the stand still condition of the vehicle, compared with the second time intervals in the running condition of the vehicle.

12. The method as defined in any of the preceding Claims, **characterized in that** the second time intervals are kept especially short in a phase at the beginning of the journey, and the wheel position associated with each identifier is determined during that phase from the signals transmitted to the receiving unit, which contain a characteristic identifier for each wheel position in addition to a pressure datum, and such wheel position is stored in the receiving unit.

13. The method as defined in any of the preceding Claims, **characterized in that** the second time intervals are set at 5 minutes to 30 minutes with the vehicle in stand still condition.

14. The method as defined in Claim 13, **characterized in that** the second time intervals are set at 10 minutes to 15 minutes with the vehicle in stand still condition.

15. The method as defined in one of the preceding Claims, **characterized in that** the third time intervals correspond to the first time intervals so that each pressure signal measured is transmitted.

16. The method as defined in one of Claims 1 through 14, **characterized in that** the tire pressure is measured and transmitted at fourth time intervals, shorter than the first time intervals, so long as the drift exceeds the threshold value.

## Revendications

1. Procédé pour la mise en service d'un mécanisme pour la surveillance et la signalisation sans fil d'une modification de pression dans des bandages pneumatiques sur des véhicules automobiles, qui est disposé, en étant réalisé de préférence en une seule pièce avec la soupape du bandage pneumatique, dans ce dernier et qui possède une source de courant, un capteur de pression qui mesure la pression du bandage pneumatique dans des premiers intervalles de temps, un convertisseur analogique-numérique pour la numérisation d'un signal de pression obtenu à partir du capteur de pression, une mémoire pour la mémorisation du signal de pression, un émetteur qui transmet une information concernant la pression mesurée du bandage pneumatique à un appareil de réception disposé dans le véhicule, ainsi qu'un comparateur, en particulier réalisé en une seule pièce avec un microprocesseur, qui compare le signal de pression à un signal de pression de comparaison qui a été mémorisé au préalable et qui commande l'émetteur, plus précisément de telle sorte que l'émetteur transmette dans des deuxièmes intervalles de temps qui sont plus grands que les premiers intervalles de temps, tant que l'enregistrement, par unité de temps, du signal de pression ne dépasse pas une valeur seuil par rapport au signal de comparaison (dérive), mais de telle sorte que l'émetteur transmette dans des troisièmes intervalles de temps qui sont inférieurs aux deuxièmes intervalles de temps, lorsque et tant que la dérive dépasse la valeur seuil, **caractérisé en ce qu'**on modifie les deuxièmes intervalles de temps en fonction d'un ou de plusieurs états physiques mesurés dans le bandage pneumatique et aptes à se modifier lors du déplacement du véhicule.

2. Procédé selon la revendication 1, **caractérisé en ce que** l'état physique est la vitesse du moteur.

3. Procédé selon la revendication 1 ou 2, **caractérisé en ce que** l'état physique est la pression de gonflage dans le bandage pneumatique.

4. Procédé selon l'une quelconque des revendications 1 à 3, **caractérisé en ce que** l'état physique à représente la dérive de la pression de gonflage dans le bandage pneumatique.

5. Procédé selon la revendication 3 ou 4, **caractérisé en ce que** la valeur seuil de la dérive du signal de pression est modifiée en fonction du signal de pression ou de la dérive de ce dernier.

6. Procédé selon la revendication 5, **caractérisé en ce qu'**on diminue la valeur seuil de la dérive du signal de pression en fonction de la diminution du signal de pression ou en fonction de l'augmentation de la dérive.

7. Procédé selon l'une quelconque des revendications 3 à 6, **caractérisé en ce que** les deuxièmes intervalles de temps sont calculés en fonction d'un champ de lignes caractéristiques prédéfinies et mémorisées dans le processeur, qui prédéfinit de manière arbitraire le fait que les deuxièmes intervalles de temps dépendent aussi bien de la vitesse que de la dérive du signal de pression.

8. Procédé selon l'une quelconque des revendications précédentes, **caractérisé en ce que** les deuxièmes intervalles de temps sont raccourcis en fonction de l'augmentation de la vitesse du véhicule.

9. Procédé selon l'une quelconque des revendications précédentes, **caractérisé en ce que** les deuxièmes intervalles de temps sont les plus grands lorsque le véhicule est à l'arrêt.

10. Procédé selon la revendication 9, **caractérisé en ce que** les deuxièmes intervalles de temps sont maintenus constants lorsque le véhicule est à l'arrêt.

11. Procédé selon l'une quelconque des revendications précédentes, **caractérisé en ce que** les deuxièmes intervalles de temps sont grands lorsque le véhicule est à l'arrêt, par rapport aux deuxièmes intervalles de temps lorsque le véhicule est en mouvement.

12. Procédé selon l'une quelconque des revendications précédentes, **caractérisé en ce que** dans une phase correspondant au début d'un voyage, les deuxièmes intervalles de temps sont maintenus pour être particulièrement courts et dans cette phase, à partir des signaux transmis à l'appareil de réception, qui contiennent, outre une information de pression, également une identification caractéristique pour chaque position de roue, on détermine la position de roue correspondant à chaque identification caractéristique et on la mémorise dans l'appareil de réception.

13. Procédé selon l'une quelconque des revendications précédentes, **caractérisé en ce qu'**on sélectionne des deuxièmes intervalles de temps, lorsque le véhicule est à l'arrêt, qui se situent dans la plage de 5 minutes à 30 minutes.

14. Procédé selon la revendication 13, **caractérisé en ce qu'**on sélectionne des deuxièmes intervalles de temps, lorsque le véhicule est à l'arrêt, qui se situent dans la plage de 10 minutes à 15 minutes.

15. Procédé selon l'une quelconque des revendications précédentes, **caractérisé en ce que** les troisièmes intervalles de temps correspondent aux premiers intervalles de temps, de telle sorte que chaque signal de pression mesurée est transmis.

16. Procédé selon l'une quelconque des revendications 1 à 14, **caractérisé en ce que**, tant que la dérive dépasse la valeur seuil, on mesure et on transmet la pression des bandages pneumatiques, dans des quatrièmes intervalles de temps qui sont plus courts que les premiers intervalles de temps.
